# EUROPEAN PATENT SPECIFICATION

(11) **EP 2 744 853 B1**
(45) Date of publication and mention of the grant of the patent: **30.12.2015**
(21) Application number: 12748483.0
(22) Date of filing: 20.08.2012
(51) Int. Cl.: C08J 9/00, C03B 37/04, C03C 13/00, C03C 13/06, C08K 7/14

(54) **FOAMABLE COMPOSITION, FOAM COMPOSITE, METHOD OF MAKING FOAM COMPOSITE AND USE OF FOAM COMPOSITE**
AUFSCHÄUMBARE ZUSAMMENSETZUNG, SCHAUMVERBUNDSTOFF, VERFAHREN ZUR HERSTELLUNG DES SCHAUMVERBUNDSTOFFS UND VERWENDUNG DES SCHAUMVERBUNDSTOFFS
COMPOSITION EXPANSIBLE, MOUSSE COMPOSITE, PROCÉDÉ DE FABRICATION D'UNE MOUSSE COMPOSITE ET UTILISATION DE LA MOUSSE COMPOSITE

(30) Priority: 18.08.2011 EP 11177971
(43) Date of publication of application: 25.06.2014
(73) Proprietor: Rockwool International A/S, 2640 Hedehusene (DK)
(72) Inventor: NIELSEN, Dag, 4000 Roskilde (DK); JOHANSSON, Dorte Bartnik, 4000 Roskilde (DK)
(74) Representative: Samuels, Lucy Alice
(86) International application number: PCT/EP2012/066196
(87) International publication number: WO 2013/024176

(56) References cited:
- GB-A- 1 020 777
- US-A1- 2007 117 873
- US-A1- 2008 132 611
- US-A1- 2010 119 813
- SHAMOV, I.V; CHEREPANOV, V.P.; TARAKANOV, O.G.: "Anwendung zerkleinerter Glasfasern als modifizierender Zusatz für Polyurethanhartschaumstoffe", PLASTE UND KAUTSCHUK, vol. 26, no. 1, 1 January 1979 (1979-01-01), pages 23-25, XP008150045, ISSN: 0048-4350

## Description

The invention relates to insulating products for use in buildings in circumstances where a high compressive strength, high compression modulus of elasticity and fire resistance are required. More particularly, the invention relates to foam-based insulating products with increased fire resistance, compression modulus of elasticity and compressive strength.

Traditionally, where building insulation materials were required to have both a high compressive strength and modulus of elasticity and a high level of fire-resistance, such as for roofing boards, the natural solution has been to use mineral fibre boards of very high density. Whilst such roofing boards have the advantage of a very high compressive strength and point load compressive resistance, and are non-combustible, it would be desirable to reduce the density and cost of production of such products, whilst maintaining or increasing their compressive strength and compression modulus of elasticity.

Roofing boards have also been manufactured in the past in the form of foam boards. Whilst these are less dense than high-density mineral fibre boards, most have the inherent disadvantage of being more combustible than mineral fibres, particularly in the case of polyurethane foam, so must usually be coated or otherwise treated with a suitable thermal barrier. Even when treated, the foam boards still tend to be more combustible than mineral fibre-based boards.

Composite foam materials comprising man-made vitreous fibres (MMVF) are known for use in the building industry.

For example DE19913511 A1 describes a method of making synthetic resin polyurethane foam comprising graphite and incombustible fibres. In one example there is a mixture of two-component polyurethane foam with an equal amount of graphite and 70% by weight glass fibres, based on the weight of graphite. The fibres have a length of 5mm. The present inventors have found that, with fibres of such a length, the viscosity of the composition before foaming becomes very high making uniform mixing problematic.

This problem is acknowledged in GB 882296, which states that the addition of a fibrous material to liquid foamable materials causes an increase in viscosity of the foamable materials with the result that it is very difficult to stir in more than about 10% by weight of fibres, based on the weight of the foamable material. Mixing fibres in the viscous foamable material is said to break the fibres, compromising the physical properties of the final product. The inventors of GB 882296 set out to solve these problems with a special process involving associating a foamable material with a mass of intermeshed mineral fibres, at least partially enclosing a zone around the mass, foaming the material to fill the zone and setting the foamable material.

US 2003/0068485 A1 describes the use of chopped or milled fibre glass in foam as a termite repellent. The examples illustrate that only 6 or 8% fibres are incorporated and that the fibres have a minimum length of around 0.4 mm.

DE 10 2005 060 744 A1 describes a polymeric foam composite material based on fibrous material and a mixture of a curable resin with unexpanded thermoplastic particles, the particles being expanded after being impregnated in the fibrous material. The proportion of fibres in the finished foam composite material is between 15 and 50 wt/%. The present inventors have found that, when standard man-made vitreous fibres are incorporated at such levels, the composition becomes highly viscous and mixing becomes very difficult, often leading to an inhomogeneous distribution of fibres in the product.

WO 94/29375 describes a fire resistant product based on an expanded polymeric foam material comprising a mixture of a foam-forming agent, a resin, fibrous material and an exfoliating material. The fibrous material can comprise man-made mineral fibres and/or inorganic fibres. The total content of exfoliating agent and/or made man mineral fibres is between 1% and 90% of the total mix of materials. As discussed above, the addition of a high percentage of standard mineral fibres has been found by the present inventors to cause problems in terms of the mixing process and, as a result, the distribution of fibres in the mixture.

US 4839393 describes polyurethane foams based on reactive polyols and polyisocyanate containing a filler and modified with an organofunctional silane containing a hydrolysable group and an ethylenically unsaturated linkage. The filler can be glass fibres and the production method involves producing polyurethane foam chips, which are subsequently admixed with the filler material.

In the article "Anwendung zerkleinerter Glasfasern als modifizierender Zusatz fur Polyurethanhartschaumstoffe" (Plaste und Kautschuk, vol. 26 no.1, pg 23-25), the characteristics of polyurethane composites comprising continuous E type AIBSI glass fibres of length less than 0.5mm are investigated. The composites described in the prior art are generally not aimed at providing an insulating board with the combination of a high fire resistance, high compressive strength and a high compression modulus of elasticity, but with a low density as compared with high-density mineral fibre boards.

Furthermore, there remains a need for a foam composite having this combination of properties that can be produced by mixing fibres into a foamable composition without complex mixing processes to provide a homogeneous distribution of fibres within the composite.

It is, therefore, an object of the invention to provide a foamable composition that produces a foam that is fire retardant, has high compressive strength and a high compression modulus of elasticity. It is a further object of the invention to provide a foamable composition in which it is relatively easy to produce a homogeneous mixture including fibres, even when the quantity of fibres in the mix is high, thereby allowing the associated advantageous properties in the foam composite of the invention to be achieved.

Therefore, the invention provides a foamable composition comprising a foam precursor and man-made vitreous fibres produced with a cascade spinner or a spinning cup, wherein at least 50% by weight of the man-made vitreous fibres have a length of less than 100 micrometres.

According to a second aspect, the invention provides a polymeric foam composite comprising a polymeric foam and man-made vitreous fibres produced with a cascade spinner or a spinning cup, wherein at least 50% by weight of the man-made vitreous fibres have a length of less than 100 micrometres.

The invention also provides a method of making the foam composite of the invention comprising:
providing man-made vitreous fibres produced with a cascade spinner or a spinning cup, wherein at least 50% of the fibres by weight have a length of less than 100 micrometres;
providing a foam precursor;
mixing the man-made vitreous fibres and foam precursor; and
inducing foam formation by addition of a further component or carrying out a further processing step.

In a further aspect, the invention provides a man-made vitreous fibre based product comprising at least one first part and at least one second part, wherein the first part comprises and preferably consists essentially of binder-coated man-made vitreous fibres and the second part comprises and preferably consists essentially of the foam composite of the invention.

In a further aspect, the invention provides the use of man-made vitreous fibres produced with a cascade spinner or a spinning cup for increasing the compressive strength of a foam, wherein at least 50% by weight of the man-made vitreous fibres have a length of less than 100 micrometres.

According to the present invention, the weight percentage of fibres above or below a given fibre length is measured with a sieving method. A representative sample of the man-made vitreous fibres is placed on a wire mesh screen of a suitable mesh size (the mesh size being the length and width of a square mesh) in a vibrating apparatus. The mesh size can be tested with a scanning electron microscope according to DIN ISO 3310. The upper end of the apparatus is sealed with a lid and vibration is carried out until essentially no further fibres fall through the mesh (approximately 30 mins). If the percentage of fibres above and below a number of different lengths needs to be established, it is possible to place screens with incrementally increasing mesh sizes on top of one another. The fibres remaining on each screen are then weighed.

The man-made vitreous fibres used according to the invention must have at least 50% by weight of the fibres with a length less than 100 micrometres as measured by the method above.

The present inventors have discovered that, by reducing the length of man-made vitreous fibres, a larger quantity of fibres can be included in the foamable composition and, as a result, the compressive strength, fire resistance, and in particular the compression modulus of elasticity of the resulting foam can be improved. Previously, it had been thought that ground fibres having such a low length would simply act as a filler, increasing the density of the foam. The inventors have surprisingly found that by using mineral fibres with such a high proportion of short fibres, far higher levels of fibres can be incorporated into the foam precursor and the resulting foam. The result of this is that significant increases in the compressive strength and, in particular, the compression modulus of elasticity of the foam can be achieved.

Preferably, the length distribution of the man-made vitreous fibres is such that at least 50% by weight of the man-made vitreous fibres have a length of less than 75 micrometres, more preferably less than 65 micrometres.

Preferably, at least 60% of the man-made vitreous fibres by weight have a length less than 100 micrometres, more preferably less than 75 micrometres and most preferably less than 65 micrometres.

Generally, the presence of longer man-made vitreous fibres is found to be a disadvantage in terms of the viscosity of the foamable composition and the ease of mixing. Therefore, it is preferred that at least 80% or even 85 or 90% of the mineral fibres have a length less than 125 micrometres. Similarly, it is preferred that at least 95%, more preferably at least 97% or 99% of the man-made vitreous fibres by weight have a length less than 250 micrometres.

The greatest compressive strength can be achieved when at least 90% by weight of the fibres have a length less than 100 micrometers and at least 75% of the fibres by weight have a length less than 65 micrometers.

Man-made vitreous fibres having the length distribution discussed above have been found generally to sit within the walls of the cells of the foam composite, without penetrating the cells to a significant extent. Therefore, it is believed that a greater percentage by weight of the fibres in the composite contribute to increasing the strength of the composite rather than merely increasing its density.

It is also preferred that at least some of the fibres, for example at least 0.5% or at least 1% by weight, have a length less than 10 micrometers. These very short fibres are thought to be able to act as nucleating agents in the foam formation process. The action of very short fibres as nucleating agents can favour the production of a foam with numerous small cells rather than fewer large cells.

The fibres can be any type of man-made vitreous fibres, but are preferably stone fibres. In general, stone fibres have a content of oxides as follows:
SiO₂ 25 to 50%, preferably 38 to 48%
Al₂O₃ 12 to 30%, preferably 15 to 28%, more preferably 17 to 23%
TiO₂ up to 2%
Fe₂O₃ 2 to 12%
CaO 5 to 30%, preferably 5 to 18%
MgO up to 15%, preferably 1 to 8% or 4 to 10%
Na₂O up to 15%
K₂O up to 15%
P₂O₅ up to 3%
MnO up to 3%
B₂O₃ up to 3%.

These values are all quoted as weight % oxides, with iron expressed as Fe₂O₃, as is conventional.

An advantage of using fibres of this composition, especially in the context of polyurethane foams, is that the significant level of iron and alumina in the fibres can act as a catalyst in formation of the foam. This effect is particularly relevant when at least some of the iron in the fibres is present as ferric iron, as is usual and/or when the level of Al₂O₃ is particularly high such as 15 to 28% or 18 to 23%.

Composites including stone fibres of the above composition have also been found to have improved fire resistance as compared with composites in which the filler used does not contain a significant level of iron.

An alternative stone wool composition useful in the invention, has oxide contents in the following ranges:
SiO₂ 37 to 42%
Al₂O₃ 18 to 23%
CaO + MgO 34 to 39%
Fe₂O₃ up to 1 %
Na₂O + K₂O up to 3%
Again, the high level of alumina in fibres of this composition can act as a catalyst in the formation of a polyurethane foam. Whilst stone fibres are preferred, the use of glass fibres, slag fibres and ceramic fibres is also possible.

The man-made vitreous fibres used in the present invention are produced with a cascade spinner or a spinning cup. Preferably, the method of the invention includes the step of producing the fibres with a cascade spinner or a spinning cup. Traditionally, fibres produced by these methods have been used for insulation, whilst continuous glass fibres have been used for reinforcement in composites. Continuous fibres (e.g. continuous E glass fibres) are known to be stronger than discontinuous fibres produced by cascade spinning or with a spinning cup (see "Impact of Drawing Stress on the Tensile Strength of Oxide Glass Fibres", J. Am. Ceram. Soc., 93 [10] 3236-3243 (2010)). Nevertheless, the present inventors have surprisingly found that foam composites comprising short, discontinuous fibres have a compressive strength that is at least comparable with foam composites comprising continuous glass fibres of a similar length. This unexpected level of strength is combined with good fire resistance, a high level of thermal insulation and cost efficient production.

In order to achieve the required length distribution of the fibres, it will usually be necessary for the fibres to be processed further after the standard production. The further processing will usually involve grinding or milling of the fibres for a sufficient time for the required length distribution to be achieved.

Usually, the fibres have an average diameter of from 2 to 7 micrometres, preferably from 2 to 6 or from 3 to 6 micrometers. In one preferred embodiment, the fibres have an average diameter of from 3 to 4 micrometres. In another preferred embodiment, the fibres have an average diameter of from 5 to 6 micrometres. Thin fibres as preferred in the invention are believed to provide a higher level of thermal insulation to the composite than thicker fibres, but without a significant reduction in strength as compared with thicker fibres as might be expected. According to the present invention, the average fibre diameter is determined for a representative sample by measuring the diameter of at least 200 individual fibres by means of the intercept method and scanning electron microscope or optical microscope (1000x magnification).

The foamable composition comprises a foam precursor and man-made vitreous fibres. The foam precursor is a material that either polymerises (often with another material) to form a polymeric foam or is a polymer that can be expanded with a blowing agent to form a polymeric foam. The composition can be any composition capable of producing a foam on addition of a further component or upon a further processing step being carried out.

Preferred foamable compositions are those capable of producing polyurethane foams. Polyurethane foams are produced by the reaction of the polyol with an isocyanate in the presence of a blowing agent. Therefore, in one embodiment, the foamable composition comprises, in addition to the man-made vitreous fibres, a polyol as the foam precursor. In another embodiment, the foamable composition comprises, in addition to the man-made vitreous fibres, an isocyanate as the foam precursor. In another embodiment, the composition comprises a mixture of an isocyanate and a polyol as the foam precursor.

If the foam precursor is a polyol, then foaming can be induced by adding a further component comprising an isocyanate. If the foam precursor is an isocyanate, foam formation can be induced by the addition of a further component comprising a polyol.

Suitable polyols for use either as the foam precursor or to be added as a further component to the foamable composition to induce foam formation are commercially available polyol mixtures from, for example, Bayer Material Science, BASF or DOW Chemicals. Commercially available polyol compositions often comprise water, which can act as a chemical blowing agent in the foam formation process.

The isocyanate for use either as the foam precursor or to be added as a further component to the foamable composition to induce foam formation is selected on the basis of the density and strength required in the foam composite as well as on the basis of toxicity. It can, for example, be selected from methylene diphenyl diisocyanate (MDI), toluene diisocyanate (TDI), hexamethylene diisocyanate (HDI) and isophorone diisocyanate (IPDI), MDI being preferred. One particularly suitable example is diphenylmethane-4,4'-diisocyanate. Other suitable isocyanates are commercially available from, for example, Bayer Material Science, BASF or DOW Chemicals.

In order to form a foam composite, a blowing agent is required. The blowing agent can be a chemical blowing agent or a physical blowing agent. In some embodiments, the foamable composition comprises a blowing agent. Alternatively, the blowing agent can be added to the foamable composition together with a further component that induces foam formation.

In the context of polyurethane foam composites, in a preferred embodiment, the blowing agent is water. Water acts as a chemical blowing agent, reacting with the isocyanate to form CO₂, which acts as the blowing gas.

When the foam-precursor is a polyol, in one embodiment, the foamable composition comprises water as a blowing agent. The water is usually present in such a foamable composition in an amount from 0.3 to 2 % by weight of the foamable composition.

As an alternative, or in addition, a physical blowing agent, such as liquid CO₂ or liquid nitrogen could be included in the foamable composition or added to the foamable composition as part of the further component that induces foam formation.

The foamable composition, in an alternative embodiment, is suitable for forming a phenolic foam. Phenolic foams are formed by a reaction between a phenol and an aldehyde in the presence of an acid or a base. A surfactant and a blowing agent are generally also present to form the foam. Therefore, the foamable composition of the invention could comprise, in addition to the man-made vitreous fibres, a phenol and an aldehyde (the foam precursor), a blowing agent and a surfactant. Alternatively, the foamable composition could comprise as the foam precursor, a phenol but no aldehyde, or an aldehyde but no phenol.

Whilst foamable compositions suitable for forming polyurethane or phenolic foams are preferred, the invention also encompasses foamable compositions suitable for forming polyisocyanurate, expanded polystyrene and extruded polystyrene foams.

The foamable composition and the foam composite of the invention can contain additives in addition to the foam precursor and the man-made vitreous fibres. When it is desired to include additives in the foam composite, as an alternative to including the additives in the foamable composition comprising man-made vitreous fibres, the additive can be included with a further component that is added to the foamable composition to induce foam formation.

As an additive, it is possible for the composition or the foam composite to comprise a fire retardant such as expandable powdered graphite, aluminium trihydrate or magnesium hydroxide. The amount of fire retardant in the composition is preferably from 3 to 20% by weight, more preferably from 5 to 15% by weight and most preferably from 8 to 12 % by weight. The total quantity of fire retardant present in the foam composite is preferably from 1 to 10%, more preferably from 2 to 8% and most preferably from 3 to 7 % by weight.

Alternatively, or in addition, the foamable composition or foam composite can comprise a flame retardant such as nitrogen- or phosphorus-containing polymers.

The fibres used in the present invention can be treated with binder, which, as a result, can be included in the composition as an additive if it is chemically compatible with the composition. The fibres used usually contain less than 10% binder based on the weight of the fibres and binder. The binder is usually present in the foamable composition at a level less than 5% based on the total weight of the foamable composition. The foam composite usually contains less than 5% binder, more usually less than 2.5% binder. In a preferred embodiment, the man-made vitreous fibres used are not treated with binder.

In some circumstances, it is advantageous, before mixing the man-made vitreous fibres into the foamable composition, to treat the fibres with a surfactant, usually a cationic surfactant. The surfactant could, alternatively, be added to the composition as a separate component. The presence of a surfactant, in particular a cationic surfactant, in the composition and as a result in the foam composite has been found to provide easier mixing and, therefore, a more homogeneous distribution of fibres within the foamable composition and the resulting foam.

One advantage of the invention is that it is possible to incorporate larger percentages of fibres into the foamable composition and, therefore into the resulting foam than would be the case with longer fibres. This allows higher levels of fire resistance and compressive strength to be achieved. Preferably, the composition comprises at least 15% by weight, more preferably at least 20% by weight, most preferably at least 35% by weight of man-made vitreous fibres. The foam composite itself preferably comprises at least 10% by weight, more preferably at least 15% by weight, most preferably at least 20% by weight of man-made vitreous fibres.

Usually the foamable composition comprises less than 85% by weight, preferably less than 80%, more preferably less than 75% by weight man-made vitreous fibres. The resulting foam composite usually contains less than 80% by weight, preferably less than 60%, more preferably less than 55% by weight man-made vitreous fibres.

The polymeric foam composite of the invention comprises a polymeric foam and man-made vitreous fibres. The foam composite can be formed from the foamable composition of the invention. It is preferred that the polymeric foam is a polyurethane foam or a phenolic foam. Polyurethane foams are most preferred due to their low curing time.

The first step in the production of the foam composite is to form the foamable composition comprising the foam precursor and the mineral fibres. The fibres can be mixed into the foam precursor by a mechanical mixing method such as use of a rotary mixer or simply by stirring. Additives as discussed above can be added to the foamable composition.

Once the fibres and foam precursor have been mixed, the formation of a foam can then be induced. The manner in which the foam is formed depends on the type of foam to be formed and is known to the person skilled in the art for each type of polymeric foam. In this respect, reference is made to "Handbook of Polymeric Foams and Foam Technology" by Klempner et al.

For example, in the case of a polyurethane foam, the man-made vitreous fibres can be mixed with a polyol as the foam precursor. The foamable composition usually also comprises water as a chemical blowing agent. Then foaming can be induced by the addition of an isocyanate.

In the case where a further component is added to the foamable composition to induce foaming, this can be carried out in a high pressure mixing head as commercially available.

In one embodiment of the method of the invention, foam formation is induced by the addition of a further component and the further component comprises further man-made vitreous fibres, wherein at least 50% by weight of the further man-made vitreous fibres have a length of less than 100 micrometres. Including man-made vitreous fibres in both the foamable composition and the further component can increase the overall quantity of fibres in the foam composite, by circumventing the practical limitation on the quantity of fibres that can be included in the foamable composition itself.

For example in the context of polyurethane foam composites a foamable composition could comprise a polyol, man-made vitreous fibres and water. Then foaming could be induced by the addition, as the further component, of a mixture of isocyanate and further man-made vitreous fibres, wherein at least 50% of the man-made vitreous fibres have a length of less than 100 micrometers.

In essentially the same process, the mixture of isocyanate and man-made vitreous fibres could constitute the foamable composition, and the mixture of polyol, water and man-made vitreous fibres could constitute the further component.

The quantity of man-made vitreous fibres in the further component is preferably at least 10 % by weight, based on the weight of the further component. More preferably the quantity is at least 20% or at least 30% based on the weight of the further component. Usually, the further component comprises less than 80% by weight, preferably less than 60%, more preferably less than 55% by weight man-made vitreous fibres.

The foam composite of the invention can be used to reduce the density of a man-made vitreous fibre based product. For example, in the case of a high density mineral fibre roofing board, parts of the board can be replaced with the foam composite. It has been found by the inventors that, whilst replacement of parts of a board with, for example, standard polyurethane foam will also decrease the density of the board, there will also be a reduction in the fire-resistance, which would make it unsuitable for some uses. Use of the foam composite of the invention, on the other hand allows a reduction in density of the overall product, whilst the high compressive strength, high fire resistance and, in particular, high compression modulus of elasticity are substantially retained.

This use of the foam composite of the invention can be in the form of a man-made vitreous fibre based product comprising at least one first part and at least one second part, wherein the first part comprises and preferably consists essentially of man-made vitreous fibres and binder and the second part comprises and preferably consists essentially of the foam composite of the invention. It is preferred that the first part does not contain foam.

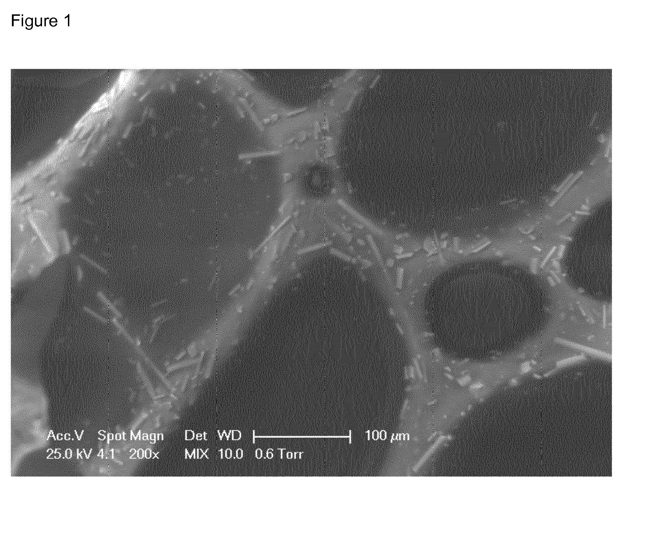

### Description of Figure 1

Figure 1 is an environmental scanning electron microscope image of a polyurethane foam composite according to the invention, in which the fibres have a length distribution such that 95% by weight of the fibres have a length below 100 micrometers and 75% by weight of the fibres have a length below 63 micrometers. The composite contains 45% fibres by weight of the composite. The instrument used was ESEM, XL 30 TMP (W), FEI/Philips incl. X-ray microanalysis system EDAX. The sample was analysed in low vacuum and mixed mode (BSE/SE).

The image shows the cellular structure of the foam and demonstrates that the man-made vitreous fibres generally sit in the walls of the cells of the foam without penetrating into the cells themselves to a significant extent.

### Examples

### Example 1 (comparative)

100.0 g of a commercially available composition of diphenylmethane-4,4'-diisocyanate and isomers and homologues of higher functionality, and 100.0 g of a commercially available polyol formulation were mixed by propellers for 20 seconds at 3000 rpm. The material was then placed in a mold to foam, which took about 3 min. The following day, the sample was weighed to determine its density and the compression strength and compression modulus of elasticity were measured according to European Standard EN 826:1996.
Compressive strength: 1100 kPa
Compression modulus of elasticity: 32000 kPa

### Example 2

100.0 g of the same commercially available polyol formulation as used in Example 1 was mixed with 200.0 g ground stone wool fibres, over 50% of which have a length less than 64 micrometers, for 10 seconds. Then 100.0 g of the commercially available composition of diphenylmethane-4,4'-diisocyanate was added and the mixture was mixed by propellers for 20 seconds at 3000 rpm. The material was then placed in a mold to foam, which took about 3 min. The following day, the sample was weighed to determine its density and the compression strength and compression modulus of elasticity were measured according to European Standard EN 826:1996.
Compressive strength: 1750 kPa
Compression modulus of elasticity: 95000 kPa

### Example 3 (comparative)

100.0 g of the same commercially available polyol formulation as used in Examples 1 and 2 was mixed for 10 seconds with 50.0 g stone fibres having a different chemical composition from those used in Example 2 and having an average length of 300 micrometers. 100.0 g of the commercially available composition of diphenylmethane-4,4'-diisocyanate was added. The mixture was then mixed by propellers for 20 seconds at 3000 rpm. The material was placed in a mold to foam, which takes about 3 min. The following day, the sample was weighed to determine its density and the compression strength and compression modulus of elasticity were measured according to European Standard EN 826:1996.
Compressive strength: 934 kPa
Compression modulus of elasticity: 45000 kPa

### Example 4

Example 3 was repeated, but the fibres were ground such that greater than 50% of the fibres had a length less than 64 micrometers. Following this grinding it became possible to mix 200g of the fibres with the polyol mixture.
Compressive strength: 1785 kPa
Compression modulus of elasticity: 115000 kPa.

### Example 5

Small flame tests were carried out according to ISO/DIS 11925-2 to establish the fire resistance of polyurethane composites according to the invention as compared with the fire resistance of composites comprising quartz sand rather than fibres according to the invention. The fibres used had a composition within the following ranges.
SiO₂ 38 to 48wt%
Al₂O₃ 17 to 23wt%
TiO2 up to 2wt%
Fe₂O₃ 2 to 12wt%
CaO 5 to 18wt%
MgO 4 to 10wt%
Na₂O up to 15wt%
K₂O up to 15wt%
P₂O₅ up to 3wt%
MnO up to 3wt%
B₂O₃ up to 3wt%

The quartz sand used had a particle size up to 2mm. In each composite tested, expanding graphite was included as a fire retardant. The test involved measuring the height of a flame from each composite under controlled conditions. The results were as follows:

| Fibre Content (wt%) | Sand Content (wt%) | Graphite Content (wt%) | Flame height (cm) |
|---|---|---|---|
| 25 | 0 | 8 | 12-17 |
| 25 | 0 | 10 | 7 |
| 31 | 0 | 10 | 5 |
| 0 | 25 | 8 | 22 |
| 0 | 25 | 10 | 11 |
| 0 | 31 | 10 | 12 |

## Claims

1. A foamable composition comprising a foam pre-cursor and man-made vitreous fibres produced with a cascade spinner or a spinning cup, wherein at least 50% by weight of the man-made vitreous fibres have a length of less than 100 micrometres.

2. A foamable composition according to claim 1, wherein at least 60% of the man-made vitreous fibres by weight have a length less than 65 micrometres.

3. A foamable composition according to any preceding claim, wherein at least 80% of the man-made vitreous fibres by weight have a length less than 125 micrometres.

4. A foamable composition according to any preceding claim, wherein at least 95% of the man-made vitreous fibres by weight have a length less than 250 micrometres.

5. A foamable composition according to any preceding claim wherein at least 75% of the man-made vitreous fibres by weight have a length less than 65 micrometres and at least 95% of the man-made vitreous fibres by weight have a length less than 100 micrometers.

6. A foamable composition according to any preceding claim, wherein at least 0.5%, preferably at least 1% by weight of the man-made vitreous fibres, have a length less than 10 micrometers.

7. A foamable composition according to any preceding claim, wherein the fibres have an average diameter of from 2 to 6, preferably from 3 to 6 micrometers.

8. A foamable composition according to any preceding claim, wherein the man-made vitreous fibres have a content of oxides as follows:
SiO₂ 25 to 50wt%, preferably 38 to 48wt%
Al₂O₃ 12 to 30wt%, preferably 15 to 28wt%, more preferably 17 to 23wt%
TiO₂ up to 2wt%
Fe₂O₃ 2 to 12wt%
CaO 5 to 30wt%, preferably 5 to 18wt%
MgO up to 15wt%, preferably 4 to 10wt%
Na₂O up to 15wt%
K₂O up to 15wt%
P₂O₅ up to 3wt%
MnO up to 3wt%
B₂O₃ up to 3wt%.

9. A foamable composition according to any preceding claim, wherein the composition comprises at least 15% by weight, preferably at least 20% by weight, more preferably at least 35% by weight of man-made vitreous fibres.

10. A foamable composition according to any preceding claim, wherein the composition comprises less than 85% by weight, preferably less than 80%, more preferably less than 75% by weight man-made vitreous fibres.

11. A foamable composition according to any preceding claim, wherein the composition further comprises a blowing agent.

12. A foamable composition according to any preceding claim that is suitable for forming a polyurethane foam or a phenolic foam composite.

13. A foamable composition according to any preceding claim, wherein the composition is suitable for forming a polyurethane foam and the foam pre-cursor is a polyol.

14. A foamable composition according to any preceding claim, wherein the composition is suitable for forming a polyurethane foam and the foam pre-cursor is an isocyanate.

15. A polymeric foam composite comprising a polymeric foam and man-made vitreous fibres produced with a cascade spinner or a spinning cup, wherein at least 50% by weight of the man-made vitreous fibres have a length of less than 100 micrometres.

16. A foam composite according to claim 15, wherein the foam is a polyurethane foam or a phenolic foam.

17. A foam composite according to claim 15 or claim 16, wherein the man-made vitreous fibres have any of the features defined in claims 2 to 8.

18. A foam composite according to any of claims 15 to 17, wherein the composite comprises at least 10% by weight, preferably at least 15% by weight, more preferably at least 20% by weight of man-made vitreous fibres.

19. A foam composite according to any of claims 15 to 18, wherein the composite comprises less than 80% by weight, preferably less than 60%, more preferably less than 55% by weight man-made vitreous fibres.

20. A foam composite according to any of claims 15 to 19, further comprising an additive selected from fire retardants such as graphite powder and surfactants, in particular, cationic surfactants.

21. A method of making the foam composite according to any of claims 15 to 20 comprising:
providing man-made vitreous fibres produced with a cascade spinner or a spinning cup, wherein at least 50% of the fibres by weight have a length of less than 100 micrometres;
providing a foam pre-cursor;
mixing the man-made vitreous fibres and foam precursor; and
inducing foam formation by addition of a further component or carrying out a further processing step.

22. A method according to claim 21, wherein foam formation is induced by the addition of a further component, the foam pre-cursor is a polyol and the further component comprises isocyanate.

23. A method according to claim 21, wherein foam formation is induced by the addition of a further component, the foam pre-cursor is an isocyanate and the further component comprises a polyol.

24. A method according to claim 21, wherein foam formation is induced by the addition of a further component, the foam pre-cursor is an aldehyde and the further component comprises a phenol.

25. A method according to claim 21, wherein foam formation is induced by the addition of a further component, the foam pre-cursor is a phenol and the further component comprises an aldehyde.

26. A method according to any of claims 21 to 25, wherein foam formation is induced by the addition of a further component and the further component comprises further man-made vitreous fibres produced with a cascade spinner or a spinning cup, wherein at least 50% by weight of the further man-made vitreous fibres have a length of less than 100 micrometres.

27. A man-made vitreous fibre-based product comprising at least one first part and at least one second part, wherein the first part comprises and preferably consists essentially of binder-coated man-made vitreous fibres and the second part comprises and preferably consists essentially of the foam composite of any of claims 15 to 20.

28. Use of man-made vitreous fibres for increasing the compressive strength or compression modulus of elasticity of a foam, wherein the fibres are as defined in any of claims 1 to 8.

## Patentansprüche

1. Eine aufschäumbare Zusammensetzung bestehend aus einem Schaumvorprodukt und künstlichen Glasfasern, die mit einer Kaskadenschleuder oder einer Schwungscheibe hergestellt werden, wobei mindestens 50 Gew.% der künstlichen Glasfasern eine Länge von weniger als 100 Mikrometern aufweisen.

2. Eine aufschäumbare Zusammensetzung entsprechend Anspruch 1, wobei mindestens 60 Gew.% der künstlichen Glasfasern eine Länge von weniger als 65 Mikrometern aufweisen.

3. Eine aufschäumbare Zusammensetzung entsprechend einem der vorhergehenden Ansprüche, wobei mindestens 80 Gew.% der künstlichen Glasfasern eine Länge von weniger als 125 Mikrometern aufweisen.

4. Eine aufschäumbare Zusammensetzung entsprechend einem der vorhergehenden Ansprüche, wobei mindestens 95 Gew.% der künstlichen Glasfasern eine Länge von weniger als 250 Mikrometern aufweisen.

5. Eine aufschäumbare Zusammensetzung entsprechend einem der vorhergehenden Ansprüche, wobei mindestens 75 Gew.% der künstlichen Glasfasern eine Länge von weniger als 65 Mikrometern aufweisen und mindestens 95 Gew.% der künstlichen Glasfasern eine Länge von weniger als 100 Mikrometern aufweisen.

6. Eine aufschäumbare Zusammensetzung entsprechend einem der vorhergehenden Ansprüche, wobei mindestens 0,5 Gew.%, bevorzugt mindestens 1 Gew.% der künstlichen Glasfasern eine Länge von weniger als 10 Mikrometern aufweisen.

7. Eine aufschäumbare Zusammensetzung entsprechend einem der vorhergehenden Ansprüche, wobei die Fasern einen durchschnittlichen Durchmesser zwischen 2 bis 6, bevorzugt 3 bis 6 Mikrometern aufweisen.

8. Eine aufschäumbare Zusammensetzung entsprechend einem der vorhergehenden Ansprüche, wobei die künstlichen Glasfasern den nachfolgenden Gehalt an Oxiden aufweisen:
SiO₂ 25 bis 50 Gew.%, bevorzugt 38 bis 48 Gew.%
Al₂O₃ 12 bis 30 Gew.%, bevorzugt 15 bis 28 Gew.%, bevorzugter 17 bis 23 Gew.%
TiO₂ bis zu 2 Gew.%
Fe₂O₃ 2 bis 12 Gew.%
CaO 5 bis 30 Gew.%, bevorzugt 5 bis 18 Gew.%
MgO bis zu 15 Gew.%, bevorzugt 4 bis 10 Gew.%
Na₂O bis zu 15 Gew.%
K₂O bis zu 15 Gew.%
P₂O₅ bis zu 3 Gew.%
MnO bis zu 3 Gew.%
B₂O₃ bis zu 3 Gew.%

9. Eine aufschäumbare Zusammensetzung entsprechend einem der vorhergehenden Ansprüche, wobei die Zusammensetzung mindestens 15 Gew.%, bevorzugt, mindestens 20 Gew.%, bevorzugter mindestens 35 Gew.% an künstlichen Glasfasern aufweist.

10. Eine aufschäumbare Zusammensetzung entsprechend einem der vorhergehenden Ansprüche, wobei die Zusammensetzung weniger als 85 Gew.%, bevorzugt weniger als 80 Gew.%, bevorzugter weniger als 75 Gew.% an künstlichen Glasfasern aufweist.

11. Eine aufschäumbare Zusammensetzung entsprechend einem der vorhergehenden Ansprüche, wobei die Zusammensetzung zudem ein Treibmittel enthält.

12. Eine aufschäumbare Zusammensetzung entsprechend einem der vorhergehenden Ansprüche, die sich zur Bildung eines Polyurethanschaumstoffs oder eines Phenolschaumverbundstoffs eignet.

13. Eine aufschäumbare Zusammensetzung entsprechend einem der vorhergehenden Ansprüche, wobei sich die Zusammensetzung zur Bildung eines Polyurethanschaumstoffs eignet und das Schaumvorprodukt ein Polyol ist.

14. Eine aufschäumbare Zusammensetzung entsprechend einem der vorhergehenden Ansprüche, wobei sich die Zusammensetzung zur Bildung eines Polyurethanschaumstoffs eignet und das Schaumvorprodukt ein Isocyanat ist.

15. Ein Polymerschaumverbundstoff bestehend aus einem Polymerschaumstoff und künstlichen Glasfasern, die mit einer Kaskadenschleuder oder einer Schwungscheibe hergestellt werden, wobei mindestens 50 Gew.% der künstlichen Glasfasern eine Länge von weniger als 100 Mikrometern aufweisen.

16. Ein Schaumverbundstoff entsprechend Anspruch 15, wobei der Schaumstoff ein Polyurethanschaumstoff oder eine Phenolschaumstoff ist.

17. Ein Schaumverbundstoff entsprechend Anspruch 15 oder Anspruch 16, wobei die künstlichen Glasfasern die in den Ansprüchen 2 bis 8 definierten Eigenschaften aufweisen.

18. Ein Schaumverbundstoff entsprechend einem der Ansprüche 15 bis 17, wobei der Verbundstoff mindestens 10 Gew.%, bevorzugt mindestens 15 Gew.%, bevorzugter mindestens 20 Gew.% an künstlichen Glasfasern aufweist.

19. Ein Schaumverbundstoff entsprechend einem der Ansprüche 15 bis 18, wobei der Verbundstoff weniger als 80 Gew.%, bevorzugt weniger als 60 Gew.%, bevorzugter weniger als 55 Gew.% an künstlichen Glasfasern aufweist.

20. Ein Schaumverbundstoff entsprechend einem der Ansprüche 15 bis 19, der zudem einen Zusatzstoff enthält, der aus feuerhemmenden Mitteln, wie z.B. Graphitpulver und Tensiden, insbesondere kationischen Tensiden, ausgewählt wird.

21. Ein Verfahren zur Herstellung des Schaumverbundstoffs entsprechend einem der Ansprüche 15 bis 20 bestehend aus:
Bereitstellen von künstlichen Glasfasern, die mit einer Kaskadenschleuder oder einer Schwungscheibe hergestellt werden, wobei mindestens 50 Gew.% der künstlichen Glasfasern eine Länge von weniger als 100 Mikrometern aufweisen;
Bereitstellen eines Schaumvorprodukts;
Mischen der künstlichen Glasfasern und des Schaumvorprodukts; und
Einleitung von Schaumstoffbildung durch Zugabe eines weiteren Bestandteils oder Durchführen eines weiteren Prozessschritts.

22. Ein Verfahren entsprechend Anspruch 21, wobei die Schaumstoffbildung durch Zugabe eines weiteren Bestandteils eingeleitet wird, das Schaumvorprodukt ein Polyol ist und der weitere Bestandteil Isocyanat umfasst.

23. Ein Verfahren entsprechend Anspruch 21, wobei die Schaumstoffbildung durch Zugabe eines weiteren Bestandteils eingeleitet wird, das Schaumvorprodukt ein Isocyanat ist und der weitere Bestandteil ein Polyol umfasst.

24. Ein Verfahren entsprechend Anspruch 21, wobei die Schaumstoffbildung durch Zugabe eines weiteren Bestandteils eingeleitet wird, das Schaumvorprodukt ein Aldehyd ist und der weitere Bestandteil ein Phenol umfasst.

25. Ein Verfahren entsprechend Anspruch 21, wobei die Schaumstoffbildung durch Zugabe eines weiteren Bestandteils eingeleitet wird, das Schaumvorprodukt ein Phenol ist und der weitere Bestandteil ein Aldehyd umfasst.

26. Ein Verfahren entsprechend einem der Ansprüche 21 bis 25, wobei die Schaumstoffbildung durch Zugabe eines weiteren Bestandteils eingeleitet wird und der weitere Bestandteil künstliche Glasfasern umfasst, die mit einer Kaskadenschleuder oder einer Schwungscheibe hergestellt werden, wobei mindestens 50 Gew.% der künstlichen Glasfasern eine Länge von weniger als 100 Mikrometern aufweisen.

27. Ein auf künstlichen Glasfasern basierendes Produkt, das zumindest einen ersten Bestandteil und mindestens einen zweiten Bestandteil umfasst, wobei der erste Bestandteil Folgendes umfasst und bevorzugt wesentlich aus mit einem Bindemittel beschichteten künstlichen Glasfasern besteht und der zweite Bestandteil Folgendes umfasst und wesentlich aus dem Schaumverbundstoff einer der Ansprüche 15 bis 20 umfasst und besteht.

28. Verwenden von künstlichen Glasfasern zur Erhöhung der Druckfestigkeit oder des Druckelastizitätsmoduls eines Schaumstoffs, wobei die Fasern den Definitionen in einem der Ansprüche 1 bis 8 entsprechen.

## Revendications

1. Une composition moussable comprenant un précurseur de mousse et des fibres vitreuses artificielles obtenues à l'aide d'une fileuse en cascade ou d'une coupelle rotative, dans laquelle au moins 50% en poids des fibres vitreuses artificielles ont une longueur inférieure à 100 micromètres.

2. Une composition moussable selon la revendication 1, dans laquelle au moins 60% des fibres vitreuses artificielles en poids ont une longueur inférieure à 65 micromètres.

3. Une composition moussable selon l'une quelconque des revendications précédentes, dans laquelle au moins 80% des fibres vitreuses artificielles en poids ont une longueur inférieure à 125 micromètres.

4. Une composition moussable selon l'une quelconque des revendications précédentes, dans laquelle au moins 95% des fibres vitreuses artificielles en poids ont une longueur inférieure à 250 micromètres.

5. Une composition moussable selon l'une quelconque des revendications précédentes dans laquelle au moins 75% des fibres vitreuses artificielles en poids ont une longueur inférieure à 65 micromètres et au moins 95% des fibres vitreuses artificielles en poids ont une longueur inférieure à 100 micromètres.

6. Une composition moussable selon l'une quelconque des revendications précédentes, dans laquelle au moins 0,5%, de préférence au moins 1% en poids des fibres vitreuses artificielles, a une longueur inférieure à 10 micromètres.

7. Une composition moussable selon l'une quelconque des revendications précédentes, dans laquelle les fibres ont un diamètre moyen de 2 à 6, de préférence de 3 à 6 micromètres.

8. Une composition moussable selon l'une quelconque des revendications précédentes, dans laquelle les fibres vitreuses artificielles ont une teneur en oxydes comme suit :
SiO₂ de 25 à 50% en poids, de préférence de 38 à 48% en poids
Al₂O₃ de 12 à 30% en poids, de préférence de 15 à 28% en poids, plus préférablement de 17 à 23% en poids
TiO₂ jusqu'à 2% en poids
Fe₂O₃ de 2 à 12% en poids
CaO de 5 à 30% en poids, de préférence de 5 à 18% en poids
MgO jusqu'à 15% en poids, de préférence de 4 à 10% en poids
Na₂O jusqu'à 15% en poids
K₂O jusqu'à 15% en poids
P₂O₅ jusqu'à 3% en poids
MnO jusqu'à 3% en poids
B₂O₃ jusqu'à 3% en poids.

9. Une composition moussable selon l'une quelconque des revendications précédentes, dans laquelle la composition comprend au moins 15% en poids, de préférence au moins 20% en poids, plus préférablement au moins 35% en poids des fibres vitreuses artificielles.

10. Une composition moussable selon l'une quelconque des revendications précédentes, dans laquelle la composition comprend moins de 85% en poids, de préférence moins de 80%, plus préférablement moins de 75% en poids des fibres vitreuses artificielles.

11. Une composition moussable selon l'une quelconque des revendications précédentes, dans laquelle la composition comprend en outre un agent gonflant.

12. Une composition moussable selon l'une quelconque des revendications précédentes qui convient pour former un composite de mousse de polyuréthane ou de mousse phénolique.

13. Une composition moussable selon l'une quelconque des revendications précédentes, dans laquelle la composition convient pour former une mousse de polyuréthane et le précurseur de mousse est un polyol.

14. Une composition moussable selon l'une quelconque des revendications précédentes, dans laquelle la composition convient pour former une mousse de polyuréthane et le précurseur de mousse est un isocyanate.

15. Un composite de mousse polymérique comprenant une mousse polymérique et des fibres vitreuses artificielles obtenues à l'aide d'une fileuse en cascade ou d'une coupelle rotative, dans lequel au moins 50% en poids des fibres vitreuses artificielles ont une longueur inférieure à 100 micromètres.

16. Un composite de mousse selon la revendication 15, dans lequel la mousse est une mousse de polyuréthane ou une mousse phénolique.

17. Un composite de mousse selon la revendication 15 ou la revendication 16, dans lequel les fibres vitreuses artificielles ont une des caractéristiques définies dans les revendications 2 à 8.

18. Un composite de mousse selon l'une quelconque des revendications 15 à 17, dans lequel le composite comprend au moins 10% en poids, de préférence au moins 15% en poids, plus préférablement au moins 20% en poids des fibres vitreuses artificielles.

19. Un composite de mousse selon l'une quelconque des revendications 15 à 18, dans lequel le composite comprend moins de 80% en poids, de préférence moins de 60%, plus préférablement moins de 55% en poids des fibres vitreuses artificielles.

20. Un composite de mousse selon l'une quelconque des revendications 15 à 19, comprenant un additif supplémentaire sélectionné parmi des retardateurs de feu comme la la poudre de graphite et les surfactants, en particulier, les surfactants cationiques.

21. Un procédé de fabrication du composite de mousse selon l'une quelconque des revendications 15 à 20 comprenant :
la fourniture de fibres vitreuses artificielles obtenues à l'aide d'une fileuse en cascade ou d'une coupelle rotative, dans lequel au moins 50% des fibres en poids ont une longueur inférieure à 100 micromètres ;
la fourniture d'un précurseur de mousse ;
le mélange des fibres vitreuses artificielles et du précurseur de mousse ; et
l'induction de la formation de mousse par l'addition d'un composant supplémentaire ou la réalisation d'une étape de transformation supplémentaire.

22. Un procédé selon la revendication 21, dans lequel la formation de mousse est induite par l'addition d'un composant supplémentaire, le précurseur de mousse est un polyol et le composant supplémentaire comprend un isocyanate.

23. Un procédé selon la revendication 21, dans lequel la formation de mousse est induite par l'addition d'un composant supplémentaire, le précurseur de mousse est un isocyanate et le composant supplémentaire comprend un polyol.

24. Un procédé selon la revendication 21, dans lequel la formation de mousse est induite par l'addition d'un composant supplémentaire, le précurseur de mousse est un aldéhyde et le composant supplémentaire comprend un phénol.

25. Un procédé selon la revendication 21, dans lequel la formation de mousse est induite par l'addition d'un composant supplémentaire, le précurseur de mousse est un phénol et le composant supplémentaire comprend un aldéhyde.

26. Un procédé selon l'une quelconque des revendications 21 à 25, dans lequel la formation de mousse est induite par l'addition d'un composant supplémentaire et le composant supplémentaire comprend des fibres vitreuses artificielles supplémentaires obtenues à l'aide d'une fileuse en cascade ou d'une coupelle rotative, dans lequel au moins 50% en poids des fibres vitreuses artificielles supplémentaires ont une longueur inférieure à 100 micromètres.

27. Un produit à base de fibres vitreuses artificielles comprenant au moins une première partie et au moins une seconde partie, dans lequel la première partie comprend et de préférence est constituée essentiellement de fibres vitreuses artificielles revêtues d'un liant et la seconde partie comprend et de préférence est constituée essentiellement du composite de mousse de l'une quelconque des revendications 15 à 20.

28. Utilisation de fibres vitreuses artificielles pour augmenter la résistance à la compression ou le module d'élasticité en compression d'une mousse, dans laquelle les fibres sont définies dans l'une quelconque des revendications 1 à 8.
